# EUROPEAN PATENT APPLICATION

(11) **EP 4 560 955 A1**
(43) Date of publication of application: **28.05.2025**
(21) Application number: 22951464.1
(22) Date of filing: 19.07.2022
(51) Int. Cl.: H04L 5/00, H04W 72/04

(54) **MULTI-PANEL ENHANCED TRANSMISSION CONFIGURATION METHOD, AND APPARATUS THEREFOR**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/106583
(87) International publication number: WO 2024/016186

(57) **Abstract**

Disclosed in the embodiments of the present disclosure are a multi-panel enhanced transmission configuration method, and an apparatus therefor. The method is executed by a network-side device. The method comprises: configuring at least one sounding reference signal (SRS) resource set for a plurality of transmissions, which are associated with different antenna panels and use, for different transmission reception points (TRPs), physical uplink shared channels (PUSCHs) on different beams, wherein the PUSCHs are PUSCHs that are respectively and simultaneously transmitted, from different panels, using different beams and for different TRPs, by a terminal device with a plurality of panels on the basis of the scheduling of a plurality of pieces of downlink control information (DCI); and sending, to the terminal device, configuration information corresponding to the at least one SRS resource set, wherein the configuration information is used for indicating the at least one SRS resource set, and the at least one SRS resource set is associated with different control resource set pool indexes. By means of the technical solution of the present disclosure, the terminal device can realize independent precoding and power control on the basis of the configuration information, thereby enhancing uplink transmission capabilities of different PDCCHs.

## Description

### TECHNICAL FIELD

The present disclosure relates to the field of communications technologies, and in particular, to a method and an apparatus for multi-panel enhanced transmission configuration.

### BACKGROUND

In related art, a network device can only configure one sounding reference signal (SRS) resource set for a terminal, while precoding of the terminal is indicated through an SRS resource indication (SRI) and a precoding matrix indicator (TPMI), and a power control of the terminal is also associated with a power control parameter set through the SRI. Therefore, with the configuration of the single one SRS resource set, both the precoding and the power control of the terminal cannot well support uplink transmission of multiple transmitting and receiving points.

### SUMMARY

Embodiments of the present disclosure provide a method and an apparatus for multi-panel enhanced transmission configuration, which may be applied to the field of Internet of Vehicles, such as Vehicle to Everything (V2X) communication, Long Term Evolution-Vehicle (LTE-V), Vehicle to Vehicle (V2V) communication, or the like; or may be used in the fields of intelligent driving, intelligent networked vehicles, and the like. A SRS resource set is configured by the network device, and configuration information of the SRS resource set is sent to a terminal, so that the terminal can implement independent precoding and power control based on the configuration information, thereby enhancing the uplink transmission capability of different PDCCHs.

According to a first aspect, embodiments of the present disclosure provide a method for multi-panel enhanced transmission configuration. The method is performed by a network device, and includes: configuring at least one sounding reference signal (SRS) resource set for transmission of a plurality of physical uplink shared channels (PUSCHs) that are associated with different panels, face different transmitting and receiving points (TRPs), and use different beams; in which the PUSCHs are PUSCHs simultaneously and respectively sent from different panels, using different beams, and facing different TRPs by a terminal having multiple panels based on scheduling of a plurality of pieces of downlink control information (DCI); sending configuration information corresponding to the at least one SRS resource set to the terminal, in which the configuration information is used to indicate the at least one SRS resource set, and indicate that the at least one SRS resource set is associated with different control resource set pool indexes.

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL-RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resource subsets, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes the plurality of different SRS resources are associated with a plurality of different control resource set pool indexes.

Optionally, the DG-PUSCHs are associated with different SRS resources through the control resource set pool index values of the scheduling DCI.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

In the technical solution, the network device can configure the SRS resource set, and send the configuration information of the SRS resource set to the terminal, so that the terminal can implement independent precoding and power control based on the configuration information, thereby enhancing the uplink transmission capability of different PDCCHs.

According to a second aspect, embodiments of the present disclosure provide a method for multi-panel enhanced transmission configuration. The method is performed by a terminal having a multiple panels, and includes: receiving configuration information sent by a network device, in which the configuration information is used to indicate at least one SRS resource set, and indicate that the at least one SRS resource set is associated with different control resource set pool indexes. The at least one SRS resource set is a resource set configured by the network device for transmission of a plurality of physical uplink shared channels (PUSCHs) that are associated with different panels, face different transmitting and receiving points (TRPs), and use different beams, and the PUSCHs are PUSCHs simultaneously and respectively sent from different panels, using different beams, and facing different TRPs by the terminal based on scheduling of a plurality of pieces of downlink control information (DCI).

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL-RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resource subsets, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes: the plurality of different SRS resources are associated with a plurality of different control resource set pool indexes.

Optionally, the DG-PUSCHs are associated with different SRS resources through the control resource set pool index value of the scheduling DC.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

In the technical solution, the terminal can receive the configuration information of the SRS resource set sent by the network device, and implement independent precoding and power control based on the configuration information, thereby enhancing the uplink transmission capability of different PDCCHs.

According to a third aspect, embodiments of the present disclosure provide a communication apparatus. The apparatus includes: a processing module, configured to configure at least one sounding reference signal (SRS) resource set for transmission of a plurality of physical uplink shared channels (PUSCHs) that are associated with different panels, face different transmitting and receiving points (TRPs), and use different beams; in which the PUSCHs are PUSCHs simultaneously and respectively sent from different panels, using different beams, and facing different TRPs by a terminal having multiple panels based on scheduling of a plurality of pieces of downlink control information (DCI); and a transceiver module, configured to send configuration information corresponding to the at least one SRS resource set to the terminal, in which the configuration information is used to indicate the at least one SRS resource set, and indicate that the at least one SRS resource set is associated with different control resource set pool indexes.

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL-RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resource subsets, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes the plurality of different SRS resources are associated with a plurality of different control resource set pool indexes.

Optionally, the DG-PUSCHs are associated with different SRS resources through the control resource set pool index values of the scheduling DCI.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

According to a fourth aspect, embodiments of the present disclosure provide another communication apparatus. The apparatus includes: a transceiver module, configured to receive configuration information sent by a network device, in which the configuration information is used to indicate at least one SRS resource set, and indicate that the at least one SRS resource set is associated with different control resource set pool indexes. The at least one SRS resource set is a resource set configured by the network device for transmission of a plurality of physical uplink shared channels (PUSCHs) that are associated with different panels, face different transmitting and receiving points (TRPs), and use different beams, and the PUSCHs are PUSCHs simultaneously and respectively sent from different panels, using different beams, and facing different TRPs by the terminal based on scheduling of a plurality of pieces of downlink control information (DCI).

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL-RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes: the plurality of different SRS resources are associated with a plurality of different control resource set pool indexes.

Optionally, the DG-PUSCHs are associated with different SRS resources through the control resource set pool index value of the scheduling DC.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

According to a fifth aspect, embodiments of the present disclosure provide a communication apparatus. The communication apparatus includes a processor. When the processor invokes a computer program in a memory, the method according to the first aspect is performed.

According to a sixth aspect, embodiments of the present disclosure provide a communication apparatus. The communication apparatus includes a processor. When the processor invokes a computer program in a memory, the method according to the second aspect is performed.

According to a seventh aspect, embodiments of the present disclosure provide a communication apparatus. The communication apparatus includes a processor and a memory. The memory stores a computer program, and the processor executes the computer program stored in the memory, so that the communication apparatus performs the method according to the first aspect.

According to an eighth aspect, embodiments of the present disclosure provide a communication apparatus. The communication apparatus includes a processor and a memory. The memory stores a computer program; and the processor executes the computer program stored in the memory, so that the communication apparatus performs the method according to the second aspect.

According to a ninth aspect, embodiments of the present disclosure provide a communication apparatus. The apparatus includes a processor and an interface circuit. The interface circuit is configured to receive code instructions and transmit the code instructions to the processor, and the processor is configured to run the code instructions to cause the apparatus to perform the method according to the first aspect.

According to a tenth aspect, embodiments of the present disclosure provide a communication apparatus. The apparatus includes a processor and an interface circuit. The interface circuit is configured to receive code instructions and transmit the code instructions to the processor, and the processor is configured to run the code instructions to cause the apparatus to perform the method according to the second aspect.

According to an eleventh aspect, embodiments of the present disclosure provide a system for multi-panel enhanced transmission configuration. The system includes the communication apparatus according to the third aspect and the communication apparatus according to the fourth aspect, or the system includes the communication apparatus according to the fifth aspect and the communication apparatus according to the sixth aspect, or the system includes the communication apparatus according to the seventh aspect and the communication apparatus according to the eighth aspect, or the system includes the communication apparatus according to the ninth aspect and the communication apparatus according to the tenth aspect.

According to a twelfth aspect, embodiments of the present disclosure provide a computer-readable storage medium for storing instructions used by a terminal. When the instructions are executed, the terminal is caused to perform the method according to the first aspect.

According to a thirteenth aspect, embodiments of the present disclosure provide a readable storage medium for storing instructions used by a network device. When the instruction are executed, the network device is caused to perform the method according to the second aspect.

According to a fourteenth aspect, the present disclosure further provides a computer program product including a computer program. When the computer program product is run on a computer, the computer is enabled to perform the method according to the first aspect.

According to a fifteenth aspect, the present disclosure further provides a computer program product including a computer program. When the computer program product is run on a computer, the computer is enabled to perform the method according to the second aspect.

According to a sixteenth aspect, the present disclosure provides a chip system, The chip system includes at least one processor and an interface, and is configured to support a terminal in implementing the functions involved in the first aspect, for example, determining or processing at least one of data and information involved in the foregoing methods. In a possible design, the chip system further includes a memory, and the memory is configured to store a computer program and data that are necessary for the terminal. The chip system may include a chip, or may include a chip and another discrete component.

According to a seventeenth aspect, the present disclosure provides a chip system. The chip system includes at least one processor and an interface, and is configured to support a network device in implementing the functions involved in the second aspect, for example, determining or processing at least one of data and information involved in the foregoing methods. In a possible design, the chip system further includes a memory, and the memory is configured to store a computer program and data that are necessary for the network device. The chip system may include a chip, or may include a chip and another discrete component.

According to an eighteenth aspect, the present disclosure provides a computer program. When the computer program is run on a computer, the computer is caused to perform the method according to the first aspect.

According to a nineteenth aspect, the present disclosure provides a computer program. When the computer program is run on a computer, the computer is caused to perform the method according to the second aspect.

### BRIEF DESCRIPTION OF THE DRAWINGS

In order to more clearly illustrate technical solutions in embodiments of the present disclosure or the background, the drawings required to be used in the embodiments of the present disclosure or the background are described below.
FIG. 1 is a schematic architectural diagram of a communication system according to an embodiment of the present disclosure.
FIG. 2 is a schematic flowchart of a method for multi-panel enhanced transmission configuration according to an embodiment of the present disclosure.
FIG. 3 is a schematic flowchart of another method for multi-panel enhanced transmission configuration according to an embodiment of the present disclosure.
FIG. 4 is a schematic structural diagram of a communication apparatus according to an embodiment of the present disclosure.
FIG. 5 is a schematic structural diagram of another communication apparatus according to an embodiment of the present disclosure.
FIG. 6 is a schematic structural diagram of a chip according to an embodiment of the present disclosure.

### DETAILED DESCRIPTION

Embodiments of the present disclosure are described in detail below, and examples of the embodiments are shown in the accompanying drawings, in which the same or similar reference numerals refer to the same or similar elements or elements with the same or similar functions throughout. The embodiments described below with reference to the accompanying drawings are exemplary and are intended to explain the present disclosure and are not to be construed as limiting the present disclosure. In the description of the present dis closure, unless otherwise stated, "/" means "or", for example, A/B may represent A or B; "and/or" is merely an association relationship describing associated objects, indicating that there may be three relationships, for example, A and/or B may indicate that A exists alone, both A and B exist, and B exists alone.

It should be noted that, in the present disclosure, the method provided by any one of the embodiments may be performed separately, or may be performed together with the possible implementation methods in other embodiments, or may be performed together with any technical solution in the related art.

In order to better understand the method multi-panel enhanced transmission configuration disclosed in the embodiments of the present disclosure, the following first describes a communication system to which the embodiments of the present disclosure are applicable.

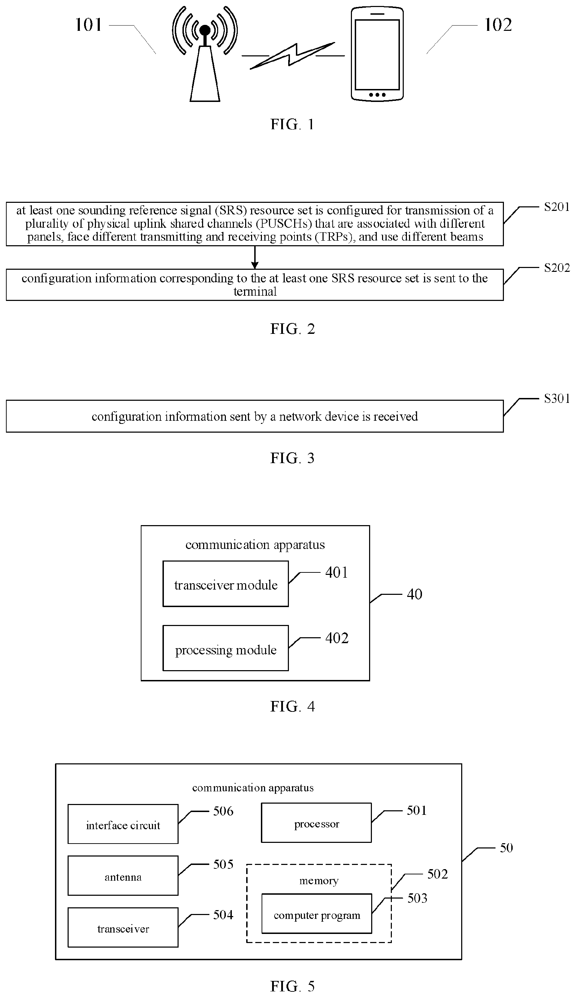

FIG. 1 is a schematic architectural diagram of a communication system according to an embodiment of the present disclosure. The communication system may include, but is not limited to, a network device and a terminal, a number and form of devices shown in FIG. 1 are only used for example and do not constitute a limitation on the embodiments of the present disclosure, and the actual application may include two or more network devices, two or more terminals. The communications system shown in FIG. 1 includes one network device 101 and one terminal 102.

It should be noted that the technical solutions of the embodiments of the present disclosure may be applied to various communication systems. For example, a Long Term Evolution (LTE) system, a 5th generation (5G) mobile communication system, an NR system, or another future new mobile communication system, etc.

The network device 101 in the embodiments of the present disclosure is an entity for transmitting or receiving a signal on a network side. F or example, the network device 101 may be an evolved base station, a transmission reception point (TRP), a next generation NodeB (gNB) in an NR system, a base station in another future mobile communication system, or an access node in a wireless fidelity (WiFi) system. A specific technology and a specific device form used by the network device are not limited in the embodiments of the present disclosure. The network device provided in the embodiments of the present disclosure may be composed of a central unit (CU) and a distributed unit (DU), where the CU may also be referred to as a control unit. The structure of the CU-DU may split a protocol layer of the network device, for example, a base station, the function of a part of the protocol layer is centralized controlled in the CU, the function of a remaining part or all of the protocol layers is distributed in the DU, and the DU is centralized controlled by the CU.

The terminal 102 in the embodiments of the present disclosure is an entity for receiving or transmitting a signal on a user side, for example, a mobile phone. The terminal may also be referred to as a terminal, user equipment (UE), a mobile station (MS), a mobile terminal (MT), or the like. The terminal may be a communication enabled car, a smart car, a mobile phone, a wearable device, a Pad, a computer with wireless transmission and reception capability, a virtual reality (VR) terminal, an augmented reality (AR) terminal, a wireless terminal in industrial control, a wireless terminal in autonomous driving, a wireless terminal in remote medical surgery, a wireless terminal in a smart grid, a wireless terminal in transportation safety, and a wireless terminal in a smart city, a wireless terminal in a smart home, etc. A specific technology and a specific device form used by the terminal are not limited in the embodiments of the present disclosure.

It may be understood that the communication system described in the embodiments of the present disclosure is intended to describe the technical solutions of the embodiments of the present disclosure more clearly, which does not constitute a limitation of the technical solutions provided by the embodiments of the present disclosure. A person of ordinary skill in the art may know that, with the evolution of the system architecture and the appearance of new service scenarios, the technical solutions provided in the embodiments of the present disclosure are also applicable to similar technical problems.

The method and apparatus for multi-panel enhanced transmission configuration provided by the present disclosure will be described in detail below with reference to the accompanying drawings.

It should be noted that the method for multi-panel enhanced transmission configuration provided by the present disclosure is applicable to communication modes such as Space Division Multiplexing (SDM), Frequency Division Multiplexing (FDM), and Time Division Multiplexing (TDM).

FIG. 2 is a schematic flowchart of a method for multi-panel enhanced transmission configuration according to an embodiment of the present disclosure. The method is performed by a network device. As shown in FIG. 2, the method may include but is not limited to the following steps.

Step S201: at least one sounding reference signal (SRS) resource set is configured for transmission of a plurality of physical uplink shared channels (PUSCHs) that are associated with different panels, face different transmitting and receiving points (TRPs), and use different beams.

The transmission of the plurality of PUSCHs that are associated with different panels, face different TRPs, and use different beams means that, the PUSCHs are simultaneously and respectively sent from the different panels facing different TRPs, and the different PUSCH transmission uses different beams.

For example, the network device configures at least one SRS resource set for the transmission of the plurality of PUSCHs, where each PUSCH transmission is PUSCH transmission from one panel facing one TRP and using a beam, and each PUSCH transmission corresponds to a panel surface, a TRP and a beam that are not completely the same.

The PUSCHs are scheduled by a terminal with multiple panels based on a plurality of pieces of downlink control information (DCI), and are simultaneously and respectively sent from different panels, using different beams, and facing different TRPs.

In an implementation of the embodiment of the present disclosure, the transmission of the PUSCHs includes at least one of transmission of dynamic grant physical uplink shared channels (DG-PUSCHs) or transmission of configured grant physical uplink shared channels (CG-PUSCHs).

As an example, the transmission of the PUSCHs includes the transmission of the DG-PUSCHs.

As another example, the transmission of the PUSCHs includes the transmission of the CG-PUSCHs.

As another example, the transmission of the PUSCHs includes both the transmission of the DG-PUSCHs and the transmission of the CG-PUSCHs.

Optionally, in an embodiment of the present disclosure, the transmission of the plurality of DG-PUSCHs associated with different panels, facing different TRPs, and using different beams, is associated with corresponding SRS resource sets through control resource set pool index values of a scheduling DCI.

For example, transmission of each DG-PUSCH from one panel and facing one TRP is associated with one index value in the control resource set pool of the scheduling DCI, and the control resource set pool index of the scheduling DCI is associated with the SRS resource set. The transmission of different DG-PUSCHs corresponds to the different control resource set pool index values. The transmission of the different DG-PUSCHs use different beams. Therefore, through the control resource set pool index value of the scheduling DCI associated with the transmission of the DG-PUSCH from one panel, facing one TRP, and using one beam, the SRS resource set associated with the control resource set pool index value can be obtained, so that the transmission of the plurality of DG-PUSCHs associated with different panels, facing different TRPs, and using different beams is associated with the corresponding SRS resource sets through the control resource set pool index values of the scheduling DCI.

That is, in the embodiments of the present disclosure, at least one SRS resource set is configured for each PUSCH. The PUSCH refers to a DG-PUSCH from one panel, facing one TRP, and using one beam, and different DG-PUSCHs are DG-PUSCHs from different panels, facing different TRPs, and using different beams.

Step S202: configuration information corresponding to the at least one SRS resource set is sent to the terminal.

The configuration information is used to indicate at least one SRS resource set and a control resource set pool index associated with at least one SRS resource set; and if a plurality of SRS resource sets are included, different SRS resource sets are associated with different control resource set pool indexes.

For example, the configuration information used to indicate the at least one SRS resource set and the control resource set pool index associated with the at least one SRS resource set is sent to the terminal.

In some embodiments of the present disclosure, a plurality of different SRS resource sets are sent to the terminal, and the plurality of different SRS resource sets are respectively associated with the transmission of the PUSCHs from different panels, facing different TRPs, and using different beams; and the plurality of different SRS resource sets correspond to different control resource set pool indexes.

For example, the at least one SRS resource set includes the plurality of different SRS resource sets, and each SRS resource set is associated with the transmission of the PUSCH from one panel, facing one TRP, and using one beam; and the transmission of different PUSCHs corresponds to different control resource set pool indexes.

Optionally, in an embodiment of the present disclosure, a function configuration of the plurality of different SRS resource sets is a "codebook" or a "non-codebook".

As an example, a function configuration manner of each SRS resource set in the plurality of different SRS resource sets is a "codebook".

As another example, a function configuration manner of each SRS resource set in the plurality of different SRS resource sets is a "non-codebook".

It should be noted that, in the embodiments of the present disclosure, the "codebook" means that a corresponding precoding is assigned to an available function configuration, there are a plurality of precodings, and different precodings are numbered using different sequence numbers, so that corresponding precoding may be directly searched from the table according to the sequence number, which is a codebook.

Optionally, in an embodiment of the present disclosure, the numbers of SRS resources included in the plurality of different SRS resource sets are separately configured. That is, each SRS resource set in the plurality of different SRS resource sets may include one or more SRS resources, and the number of SRS resources included in each SRS resource set may be the same or different.

Optionally, in an embodiment of the present disclosure, the plurality of different SRS resource sets are respectively associated with different power control parameters and path loss estimation reference signal (PL-RS) sets.

For example, each SRS resource set in the plurality of different SRS resource sets may be associated with a corresponding power control parameter and a PL-RS set.

Optionally, in an embodiment of the present disclosure, the at least one SRS resource set being associated with different control resource set pool indexes includes: the plurality of different SRS resource sets are respectively associated with a plurality of different control resource set pool indexes.

For example, each SRS resource set in the plurality of different SRS resource sets is respectively associated with one control resource set pool index, and the different SRS resource sets are associated with different control resource set pool indexes.

Optionally, in an embodiment of the present disclosure, the DG-PUSCHs are associated with different SRS resource sets through the control resource set pool index values of the scheduling DCI.

For example, different DG-PUSCHs are respectively associated with different control resource set pool index values, and the different control resource set pool indexes are respectively associated with the different SRS resource sets. Therefore, through the control resource set pool indexes corresponds to the control resource set pool index values associated with the DG-PUSCHs, the SRS resource sets associated with the control resource set pool indexes may be obtained, implementing that the different DG-PUSCHs are associated with the different SRS resource sets.

Optionally, in an embodiment of the present disclosure, a CG-PUSCH may be a CG-PUSCH of a type I. For the CG-PUSCH of the type I, a corresponding SRS resource set identifier and a sounding reference signal resource identifier (SRI) are configured for a configured grant configuration parameter through a radio resource control (RRC) signaling, or a corresponding control resource set pool index and a corresponding SRI are configured for a configured grant configuration parameter through an RRC signaling.

It should be noted that, in the embodiments of the present disclosure, the CG-PUSCH of the type I is provided with an uplink grant by the RRC. All transmission parameters including a period, a time offset, a frequency resource, and a modulation and coding scheme used for uplink transmission, are configured through the RRC signaling. After receiving the RRC configuration, the terminal uses the received configured grant for transmission at the moment obtained by the preset period and offset calculation.

The uplink transmission grant is provided by a resource management layer, and the terminal stores the configuration and uses the configuration as a grant configuration.

As an example, when the CG-PUSCH is the CG-PUSCH of the type I, the network device configures the corresponding SRS resource set identifier and the SRI for the configured grant configuration parameter through the RRC signaling.

As another example, when the CG-PUSCH is the CG-PUSCH of type I, the network device configures the corresponding control resource set pool index and the SRI for the configured grant configuration parameter through the RRC signaling.

Optionally, in an embodiment of the present disclosure, a CG-PUSCH may be a CG-PUSCH of a type II. For the CG-PUSCH of type II, different configured grant configuration parameters are associated with corresponding SRS resource sets by activating the control resource set pool index values of the DCI.

For example, when the CG-PUSCH is the CG-PUSCH of the type II, the network device associates the corresponding SRS resource sets with the different configured grant configuration parameters by activating the control resource set pool index values of the DCI.

It should be noted that, in the embodiments of the present disclosure, the CG-PUSCH of the type II is that a transmission period is provided by the RRC, and the network device implements the resource activation and the configuration of a part of the transmission parameters through DCI, so as to implement activation transmission of the grant configuration; and after receiving the activation command, the terminal transmits according to the pre-configured period if data transmission exists in the cache, and if no data exits, the terminal does not transmit any data. The sending time of the PDCCH specifies the activation time.

In some embodiments of the present disclosure, the at least one SRS resource set includes one SRS resource set, and the one SRS resource set includes a plurality of different SRS resource subsets, in which a function configuration of the one SRS resource set is a "codebook" or a "non-codebook".

As an example, the at least one SRS resource set includes one SRS resource set, the SRS resource set includes the plurality of different SRS resource subsets, and a function configuration manner of the SRS resource set is a "codebook".

As another example, the at least one SRS resource set includes one SRS resource set, the SRS resource set includes the plurality of different SRS resource subsets, and a function configuration manner of the SRS resource set is a "non-codebook".

It should be noted that, in the embodiments of the present disclosure, the SRS resource subset may be divided in a default manner. For example, a default allocation of the same numbers; the division of the SRS resource subsets may be performed in a predefined manner, for example, the SRS resource allocation is performed according to a maximum SRS port number ratio (based on the codebook) supported by different panels, or the SRS resource allocation is performed according to the same ratio of a maximum number of layers supported by different panels; or the division of the SRS resource subsets may be performed according to the configuration or indication by the base station.

Optionally, in an embodiment of the present disclosure, the numbers of SRS resources included in the plurality of different SRS resource subsets are separately configured.

For example, each SRS resource subset in the plurality of different SRS resource subsets may include one or more SRS resources, and the number of the SRS resources in each SRS resource subset may be configured separately.

Optionally, in an embodiment of the present disclosure, the plurality of different SRS resource subsets are respectively associated with different power control parameters and PL-RS sets.

For example, each SRS resource subset in the plurality of different SRS resource subsets is respectively associated with a power control parameter and a PL-RS set.

Optionally, in an embodiment of the present disclosure, the at least one SRS resource set being associated with different control resource set pool indexes, includes: the plurality of different SRS resource subsets are associated with a plurality of different control resource set pool indexes.

For example, each SRS resource subset in the plurality of different SRS resource subsets is respectively associated with one control resource set pool index, and respective SRS resource subsets are associated with different control resource set pool indexes.

Optionally, in an embodiment of the present disclosure, the DG-PUSCHs are associated with different SRS resource subsets through the control resource set pool index values of the scheduling DCI.

For example, the different DG-PUSCHs are respectively associated with different control resource set pool index values, and different SRS resource subsets are respectively associated with the different control resource set pool indexes. Therefore, through the control resource set pool indexes corresponds to the control resource set pool indexes value associated with the DG-PUSCHs, the SRS resource subsets associated with the control resource set pool indexes may be obtained, to implement that different DG-PUSCHs are associated with different SRS resource subsets.

Optionally, in an embodiment of the present disclosure, a CG-PUSCH is a CG-PUSCH of a type I. For the CG-PUSCH of type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

As an example, when the CG-PUSCH is the CG-PUSCH of the type I, the network device configures the corresponding SRS resource subset identifier and the SRI for the configured grant configuration parameter through the RRC signaling.

As another example, when the CG-PUSCH is the CG-PUSCH of the type I, the network device configures the corresponding control resource set pool index and the SRI for the configured grant configuration parameter through the RRC signaling.

Optionally, in an embodiment of the present disclosure, a CG-PUSCH is a CG-PUSCH of a type II. For the CG-PUSCH of type II, different configured grant configuration parameters are associated with corresponding SRS resource subsets by activating the control resource set pool index values of the DCI. For example, when the CG-PUSCH is the CG-PUSCH of the type II, the network device associates the corresponding SRS resource subsets with the different configured grant configuration parameters by activating the control resource set pool index values of the DCI.

In some implementations of the embodiments of the present disclosure, the at least one SRS resource set includes one SRS resource set, and the one SRS resource set includes a plurality of different SRS resources, in which a function configuration of the one SRS resource set is a "codebook" or a "non-codebook". As an example, the at least one SRS resource set includes one SRS resource set, and the one SRS resource set includes the plurality of different SRS resources; and a function configuration manner of the SRS resource set is a "codebook". As another example, the at least one SRS resource set includes one SRS resource set, and the SRS resource set includes the plurality of different SRS resources; and a function configuration manner of the SRS resource set is a "non-codebook".

Optionally, in an embodiment of the present disclosure, the at least one SRS resource set being associated with different control resource set pool indexes includes: the plurality of different SRS resources are associated with a plurality of different control resource set pool indexes.

For example, each SRS resource in the plurality of different SRS resources included in the at least one SRS resource set is respectively associated with one control resource set pool index, and respective SRS resource are associated with different control resource set pool indexes.

Optionally, in an embodiment of the present disclosure, the DG-PUSCHs are associated with different SRS resources through the control resource set pool index values of the scheduling DCI.

For example, the different DG-PUSCHs are respectively associated with the different control resource set pool index values, and the different SRS resources are respectively associated with the different control resource set pool indexes. Therefore, through the control resource set pool indexes corresponding to the control resource set pool index values associated with the DG-PUSCHs, the SRS resources associated with the control resource set pool indexes may be obtained, to implement that different DG-PUSCHs are associated with different SRS resources.

It may be understood that the foregoing embodiments are implementations of the method for multi-panel enhanced transmission configuration of the embodiments of the present disclosure described from the aspect of the network device. The embodiments of the present disclosure further provide another method for multi-panel enhanced transmission configuration. The implementations of the method for multi-panel enhanced transmission configuration will be described below from the aspect of a terminal.

By implementing the embodiments of the present disclosure, the network device can configure the SRS resource set, and send the configuration information of the SRS resource set to the terminal, so that the terminal can implement independent precoding and power control based on the configuration information, thereby enhancing the uplink transmission capability of different PDCCHs.

It should be noted that "one" in the embodiments of the present disclosure refers to at least one, and does not define that there is only one. Similarly, for "two", they also refer to at least two, and there is no limitation that there must be only two. The "control resource set pool index" in the embodiments of the present disclosure may be any identifier that can identify the control resource set pool, and the representation form is not limited to the examples in the foregoing embodiments.

FIG. 3 is a schematic flowchart of another method for multi-panel enhanced transmission configuration according to an embodiment of the present disclosure. The method is performed by a terminal having multiple panels. As shown in FIG. 3, the method may include but is not limited to the following steps.

Step S301: configuration information sent by a network device is received.

In an embodiment of the present disclosure, the configuration information is used to indicate at least one SRS resource set and a control resource set pool index associated with the at least one SRS resource set. If a plurality of SRS resource sets are included, different SRS resource sets are associated with different control resource set pool indexes; the at least one SRS resource set is a resource set configured by the network device for transmission of a plurality of PUSCHs associated with different panels, facing different TRPs, and using different beams. The PUSCHs are simultaneously and respectively sent from the different panels, facing different TRPs, and using different beams by the terminal based on the scheduling of a plurality of pieces of downlink control information (DCI).

For example, the terminal receives the configuration information that is sent by the network device and that is used to indicate the at least one SRS resource set and the different control resource set pool indexes associated with the SRS resource set. The SRS resource set is a resource set that is configured by the network device for transmission of a plurality of PUSCHs associated with different panels, facing different TRPs, and using different beams, and the PUSCHs are simultaneously and respectively sent from the different panels, facing different TRPs, and using different beams by the terminal based on the scheduling of a plurality of pieces of DCI.

In an implementation, the transmission of the PUSCHs includes at least one of transmission of DG-PUSCHs or transmission of CG-PUSCHs.

As an example, the transmission of the PUSCHs includes the transmission of the DG-PUSCHs.

As another example, the transmission of the PUSCHs includes the transmission of the CG-PUSCHs.

As another example, the transmission of the PUSCHs includes both the transmission of the DG-PUSCHs and the transmission of the CG-PUSCHs.

Optionally, in an embodiment of the present disclosure, the transmission of the plurality of DG-PUSCHs associated with different panels, facing different TRPs, and using different beams, is associated with corresponding SRS resource sets through control resource set pool index values of a scheduling DCI.

For example, transmission of each DG-PUSCH from one panel and facing one TRP is associated with one index value in the control resource set pool of the scheduling DCI, and the control resource set pool index of the scheduling DCI is associated with the SRS resource set. The transmission of different DG-PUSCHs corresponds to the different control resource set pool index values. The transmission of the different DG-PUSCHs use different beams. Therefore, through the control resource set pool index value of the scheduling DCI associated with the transmission of the DG-PUSCH from one panel, facing one TRP, and using one beam, the SRS resource set associated with the control resource set pool index value can be obtained, so that the transmission of the plurality of DG-PUSCHs associated with different panels, facing different TRPs, and using different beams is associated with the corresponding SRS resource sets through the control resource set pool index values of the scheduling DCI.

In some embodiments of the present disclosure, the at least one SRS resource set includes a plurality of different SRS resource sets, and the plurality of different SRS resource sets are respectively associated with the transmission of the PUSCHs from different panels, facing different TRPs, and using different beams.

For example, the at least one SRS resource set includes the plurality of different SRS resource sets, and each SRS resource set is respectively associated with the transmission of the PUSCH from one panel, facing one TRP, and using one beam.

Optionally, in an embodiment of the present disclosure, a function configuration of the plurality of different SRS resource sets is a "codebook" or a "non-codebook".

As an example, a function configuration manner of each SRS resource set in the plurality of different SRS resource sets is a "codebook".

As another example, a function configuration manner of each SRS resource set in the plurality of different SRS resource sets is a "non-codebook".

Optionally, in an embodiment of the present disclosure, the number s of SRS resources included in the plurality of different SRS resource sets are separately configured. For example, each SRS resource set in the plurality of different SRS resource sets may include one or more SRS resources, and the number of SRS resources included in each SRS resource set may be configured separately. That is, each SRS resource set in the plurality of different SRS resource sets may include one or more SRS resources, and the number of SRS resources included in each SRS resource set may be the same or different.

Optionally, in an embodiment of the present disclosure, the plurality of different SRS resource sets are respectively associated with different power control parameters and PL-RS sets.

For example, each SRS resource set in the plurality of different SRS resource sets may be associated with a corresponding power control parameter and a PL-RS set.

Optionally, in an embodiment of the present disclosure, the at least one SRS resource set being associated with different control resource set pool indexes includes: the plurality of different SRS resource sets are respectively associated with a plurality of different control resource set pool indexes.

For example, each SRS resource set in the plurality of different SRS resource sets is respectively associated with one control resource set pool index, and the different SRS resource sets are associated with different control resource set pool indexes.

Optionally, in an embodiment of the present disclosure, the DG-PUSCHs are associated with different SRS resource sets through the control resource set pool index values of the scheduling DCI.

For example, different DG-PUSCHs are respectively associated with different control resource set pool index values, and the different control resource set pool indexes are respectively associated with the different SRS resource sets. Therefore, through the control resource set pool indexes corresponds to the control resource set pool index values associated with the DG-PUSCHs, the SRS resource sets associated with the control resource set pool indexes may be obtained, implementing that the different DG-PUSCHs are associated with the different SRS resource sets.

Optionally, in an embodiment of the present disclosure, a CG-PUSCH may be a CG-PUSCH of a type I. For the CG-PUSCH of the type I, a corresponding SRS resource set identifier and an SRI are configured for a configured grant configuration parameter through an RRC signaling, or a corresponding control resource set pool index and a corresponding SRI are configured for a configured grant configuration parameter through an RRC signaling

As an example, when the CG-PUSCH is the CG-PUSCH of the type I, the terminal configures the corresponding SRS resource set identifier and the SRI for the configured grant configuration parameter through the RRC signaling.

As another example, when the CG-PUSCH is the CG-PUSCH of type I, the terminal configures the corresponding control resource set pool index and the SRI for the configured grant configuration parameter through the RRC signaling.

Optionally, in an embodiment of the present disclosure, a CG-PUSCH may be a CG-PUSCH of a type II. For the CG-PUSCH of type II, different configured grant configuration parameters are associated with corresponding SRS resource sets by activating the control resource set pool index values of the DCI.

For example, when the CG-PUSCH is the CG-PUSCH of the type II, the terminal associates the corresponding SRS resource sets with the different configured grant configuration parameters by activating the control resource set pool index values of the DCI.

In some embodiments of the present disclosure, the at least one SRS resource set includes one SRS resource set, and the one SRS resource set includes a plurality of different SRS resource subsets, in which a function configuration of the one SRS resource set is a "codebook" or a "non-codebook".

As an example, the at least one SRS resource set includes one SRS resource set, the SRS resource set includes the plurality of different SRS resource subsets, and a function configuration manner of the SRS resource set is a "codebook".

As another example, the at least one SRS resource set includes one SRS resource set, the SRS resource set includes the plurality of different SRS resource subsets, and a function configuration manner of the SRS resource set is a "non-codebook"..

Optionally, in an embodiment of the present disclosure, the numbers of SRS resources included in the plurality of different SRS resource subsets are separately configured.

For example, each SRS resource subset in the plurality of different SRS resource subsets may include one or more SRS resources, and the number of the SRS resources in each SRS resource subset may be configured separately.

Optionally, in an embodiment of the present disclosure, the plurality of different SRS resource subsets are respectively associated with different power control parameters and PL-RS sets.

For example, each SRS resource subset in the plurality of different SRS resource subsets is respectively associated with a power control parameter and a PL-RS set.

Optionally, in an embodiment of the present disclosure, the at least one SRS resource set being associated with different control resource set pool indexes, includes: the plurality of different SRS resource subsets are associated with a plurality of different control resource set pool indexes.

For example, each SRS resource subset in the plurality of different SRS resource subsets is respectively associated with one control resource set pool index, and respective SRS resource subsets are associated with different control resource set pool indexes.

Optionally, in an embodiment of the present disclosure, the DG-PUSCHs are associated with different SRS resource subsets through the control resource set pool index values of the scheduling DCI.

For example, the different DG-PUSCHs are respectively associated with different control resource set pool index values, and different SRS resource subsets are respectively associated with the different control resource set pool indexes. Therefore, through the control resource set pool indexes corresponds to the control resource set pool indexes value associated with the DG-PUSCHs, the SRS resource subsets associated with the control resource set pool indexes may be obtained, to implement that different DG-PUSCHs are associated with different SRS resource subsets.

Optionally, in an embodiment of the present disclosure, a CG-PUSCH is a CG-PUSCH of a type I. For the CG-PUSCH of type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

As an example, when the CG-PUSCH is the CG-PUSCH of the type I, the terminal configures the corresponding SRS resource subset identifier and the SRI for the configured grant configuration parameter through the RRC signaling.

As another example, when the CG-PUSCH is the CG-PUSCH of the type I, the terminal configures the corresponding control resource set pool index and the SRI for the configured grant configuration parameter through the RRC signaling.

Optionally, in an embodiment of the present disclosure, a CG-PUSCH is a CG-PUSCH of a type II. For the CG-PUSCH of type II, different configured grant configuration parameters are associated with corresponding SRS resource subsets by activating the control resource set pool index values of the DCI.

For example, when the CG-PUSCH is the CG-PUSCH of the type II, the network device associates the corresponding SRS resource subsets with the different configured grant configuration parameters by activating the control resource set pool index values of the DCI.

In some embodiments of the present disclosure, the at least one SRS resource set includes one SRS resource set, and the one SRS resource set includes a plurality of different SRS resources, in which a function configuration of the one SRS resource set is a "codebook" or a "non-codebook".

As an example, the at least one SRS resource set includes one SRS resource set, and the one SRS resource set includes the plurality of different SRS resources; and a function configuration manner of the SRS resource set is a "codebook".

As another example, the at least one SRS resource set includes one SRS resource set, and the SRS resource set includes the plurality of different SRS resources; and a function configuration manner of the SRS resource set is a "non-codebook".

Optionally, in an embodiment of the present disclosure, the at least one SRS resource set being associated with different control resource set pool indexes includes: the plurality of different SRS resources are associated with a plurality of different control resource set pool indexes.

For example, each SRS resource in the plurality of different SRS resources included in the at least one SRS resource set is respectively associated with one control resource set pool index, and different SRS resource are associated with different control resource set pool indexes.

Optionally, in an embodiment of the present disclosure, the DG-PUSCHs are associated with different SRS resources through the control resource set pool index values of the scheduling DCI.

For example, the different DG-PUSCHs are respectively associated with the different control resource set pool index values, and the different SRS resources are respectively associated with the different control resource set pool indexes. Therefore, through the control resource set pool indexes corresponding to the control resource set pool index values associated with the DG-PUSCHs, the SRS resources associated with the control resource set pool indexes may be obtained, to implement that different DG-PUSCHs are associated with different SRS resources.

Optionally, in an embodiment of the present disclosure, a CG-PUSCH is a CG-PUSCH of a type I. For the CG-PUSCH of the type I, a corresponding SRS resource identifier and an SRI are configured for the configured grant configuration parameter through an RRC signaling, or a corresponding control resource set pool index and an SRI are configured for the configured grant configuration parameter through an RRC signaling.

As an example, when the CG-PUSCH is a CG-PUSCH of a type I, the terminal configures the corresponding SRS resource identifier and the SRI for the configured grant configuration parameter through the RRC signaling.

As another example, when the CG-PUSCH is a CG-PUSCH of a type I, the terminal configures the corresponding control resource set pool index and the SRI for the configured grant configuration parameter through the RRC signaling.

Optionally, in an embodiment of the present disclosure, a CG-PUSCH is a CG-PUSCH of a type II. For the CG-PUSCH of the type II, different configured grant configuration parameters are associated with corresponding SRS resources by activating the control resource set pool index values of the DCI.

For example, when the CG-PUSCH is a CG-PUSCH of a type II, the terminal associates corresponding SRS resources with different configured grant configuration parameters by activating the control resource set pool index values of the DCI.

By implementing the embodiments of the present disclosure, the terminal can receive the configuration information of the SRS resource set sent by the network device, and implement independent precoding and power control based on the configuration information, thereby enhancing the uplink transmission capability of different PDCCHs.

In the foregoing embodiments provided in the present disclosure, the methods provided in the embodiments of the present disclosure are respectively described from the perspectives of the network device and the terminal. To implement the functions in the methods provided in the foregoing embodiments of the present disclosure, the network device and the terminal may include a hardware structure and a software module, to implement the foregoing functions in a form of a hardware structure, a software module, or a hardware structure plus software module. A function in the foregoing functions may be performed by using a hardware structure, a software module, or a hardware structure plus a software module. FIG. 4 is a schematic structural diagram of a communication apparatus 40 according to an embodiment of the present disclosure. The communication apparatus 40 shown in FIG. 4 may include a transceiver module 401 and a processing module 402. The transceiver module 401 may include a sending module and/or a transceiver module, the sending module is configured to implement a sending function, and the transceiver module is configured to implement a receiving function, and the transceiver module 401 may implement a sending function and/or a receiving function.

The communication apparatus 40 may be a network device, an apparatus in the network device, or may be an apparatus that can be used by matching with the network device; or the communication apparatus 40 may be a terminal, an apparatus in the terminal, or an apparatus that can be used by matching with the terminal.

When the communication apparatus 40 is a network device: a processing module 402 is configured to configure at least one sounding reference signal (SRS) resource set for transmission of a plurality of physical uplink shared channels (PUSCHs) that are associated with different panels, face different transmitting and receiving points (TRPs), and use different beams; in which the PUSCHs are PUSCHs simultaneously and respectively sent from different panels, using different beams, and facing different TRPs by a terminal having multiple panels based on scheduling of a plurality of pieces of downlink control information (DCI); and a transceiver module 401 is configured to send configuration information corresponding to the at least one SRS resource set to the terminal, in which the configuration information is used to indicate the at least one SRS resource set, and indicate that the at least one SRS resource set is associated with different control resource set pool indexes.

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL - RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resource subsets, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes the plurality of different SRS resources are associated with a plurality of different control resource set pool indexes.

Optionally, the DG-PUSCHs are associated with different SRS resources through the control resource set pool index values of the scheduling DCI.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

According to the apparatus of the embodiments of the present disclosure, the network device can configure the SRS resource set, and send the configuration information of the SRS resource set to the terminal, so that the terminal can implement independent precoding and power control based on the configuration information, thereby enhancing the uplink transmission capability of different PDCCHs.

When the communication apparatus 40 is a terminal: a transceiver module 401 is configured to receive configuration information sent by a network device, in which the configuration information is used to indicate at least one SRS resource set, and indicate that the at least one SRS resource set is associated with different control resource set pool indexes. The at least one SRS resource set is a resource set configured by the network device for transmission of a plurality of physical uplink shared channels (PUSCHs) that are associated with different panels, face different transmitting and receiving points (TRPs), and use different beams, and the PUSCHs are PUSCHs simultaneously and respectively sent from different panels, using different beams, and facing different TRPs by the terminal based on scheduling of a plurality of pieces of downlink control information (DCI).

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL - RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes: the plurality of different SRS resources are associated with a plurality of different control resource set pool indexes.

Optionally, the DG-PUSCHs are associated with different SRS resources through the control resource set pool index value of the scheduling DC.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

According to the apparatus of the embodiments of the present disclosure, the terminal can receive the configuration information of the SRS resource set sent by the network device, and implement independent precoding and power control based on the configuration information, thereby enhancing the uplink transmission capability of different PDCCHs.

Please refer to FIG. 5, FIG. 5 is a block diagram of another communication apparatus 50 according to an embodiment of the present disclosure. The communication apparatus 50 may be a network device, a terminal, or a chip, a chip system, or a processor, etc., that supports the network device to realize the above methods, or a chip, a chip system, or a processor, etc., that supports the terminal to realize the above methods. The apparatus can be used to realize the methods in the method embodiments. For details, please refer to the description in the method embodiments.

The communication apparatus 50 may include one or more processors 501. The processor 501 can be a general-purpose processor or a special-purpose processor, for example, a baseband processor or a central processing unit. The baseband processor can be used to process the communication protocol and communication data, and the central processing unit can be used to control the communication apparatus (such as a base station, a baseband chip, a terminal, a terminal chip, a DU or CU, etc.), execute the computer program, and process the data of the computer program.

Optionally, the communication apparatus 50 may also include one or more memories 502 for storing a computer program 503. When the computer program 503 is executed by the processor 501, the communication apparatus 50 is caused to perform the methods in the above method embodiments. Optionally, data may also be stored in the memory 502. The communication apparatus 50 and the memory 502 can be separate or integrated.

Optionally, the communication apparatus 50 may also include a transceiver 504, and an antenna 505. The transceiver 504 can be called a transceiver unit, a transceiving machine, or a transceiver circuit, etc., to realize the transmitting and receiving function. The transceiver 504 may include a receiver and a transmitter. The receiver may be called a receiving machine or a receiving circuit, etc., to realize the receiving function, and the transmitter can be called a transmitting machine or a transmitting circuit, etc., to realize the transmitting function.

Optionally, the communication apparatus 50 may also include one or more interface circuits 5010. The interface circuit 5010 is configured to receive code instructions and transmit the code instructions to the processor 501. The processor 501 runs code instructions to cause the communication apparatus 50 to perform the methods in the above method embodiments.

When the communication apparatus 50 is a network device: the transceiver 504 is configured to perform the step S202 in Fig. 2, and the processor 501 is configured to perform the step S201 in Fig. 2.

When the communication apparatus 50 is a terminal: the transceiver 504 is configured to perform the step S301 in Fig. 3.

In an implementation, the processor 501 may include a transceiver for implementing receiving and transmitting function. For example, the transceiver can be a transceiver circuit, or an interface, or an interface circuit. The transceiver circuit, interface, or interface circuit used to implement the receiving and transmitting function can be separate or integrated. The transceiver circuit, interface, or interface circuit may be used for reading and writing code/data, or the transceiver circuit, interface, or interface circuit may be used for the transmission or transfer of signals.

In an implementation, a computer program may be stored on the processor 501. When the computer program is running on the processor 501, the communication apparatus 50 is caused to perform the methods in the above method embodiments. The computer program may be solidified in the processor 501. In this case, the processor 501 may be implemented by a hardware.

In an implementation, the communication apparatus 50 includes a circuit that can implement the sending or receiving or communicating function in the above method embodiments. The processor and transceiver in the present disclosure can be implemented in an integrated circuit (IC), an analog IC, a radio frequency integrated circuit (RFIC), a mixed-signal IC, an application specific integrated circuit (ASIC), a printed circuit board (PCB), an electronic device, etc. The processor and transceiver can also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal (such as the terminal in the method embodiments), but the scope of the communication apparatus in the present disclosure is not limited to this, and the structure of the communication apparatus may not be limited by FIG. 10. The communication apparatus can be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) a module embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

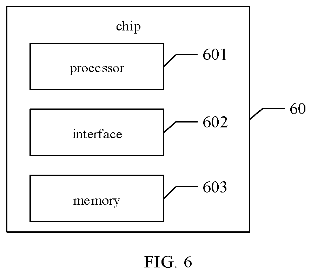

For a case that the communication apparatus may be a chip or a chip system, refer to a schematic structural diagram of the chip 60 shown in FIG. 6. The chip shown in FIG. 6 includes a processor 601 and an interface 602, in which there may be one or more processors 601, and there may be a plurality of interfaces 602.

In a case that the chip is configured to implement a function of the network device in the embodiments of the present disclosure:

The processor 601 is configured to configure at least one sounding reference signal (SRS) resource set for transmission of a plurality of physical uplink shared channels (PUSCHs) that are associated with different panels, face different transmitting and receiving points (TRPs), and use different beams; in which the PUSCHs are PUSCHs simultaneously and respectively sent from different panels, using different beams, and facing different TRPs by a terminal having multiple panels based on scheduling of a plurality of pieces of downlink control information (DCI); and the interface 602 is configured to send configuration information corresponding to the at least one SRS resource set to the terminal, in which the configuration information is used to indicate the at least one SRS resource set, and indicate that the at least one SRS resource set is associated with different control resource set pool indexes.

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL-RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resource subsets, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes the plurality of different SRS resources are associated with a plurality of different control resource set pool indexes.

Optionally, the DG-PUSCHs are associated with different SRS resources through the control resource set pool index values of the scheduling DCI.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

In a case that the chip is configured to implement a function of the terminal in the embodiments of the present disclosure:
The interface 602 is configured to receive configuration information sent by a network device, in which the configuration information is used to indicate at least one SRS resource set, and indicate that the at least one SRS resource set is associated with different control resource set pool indexes. The at least one SRS resource set is a resource set configured by the network device for transmission of a plurality of physical uplink shared channels (PUSCHs) that are associated with different panels, face different transmitting and receiving points (TRPs), and use different beams, and the PUSCHs are PUSCHs simultaneously and respectively sent from different panels, using different beams, and facing different TRPs by the terminal based on scheduling of a plurality of pieces of downlink control information (DCI).

In an implementation, the transmission of the PUSCHs includes at least one of transmission of dynamic grant physical uplink shared channels (DG-PUSCHs) or transmission of configured grant physical uplink shared channels (CG-PUSCHs).

In an optional implementation, the transmission of DG-PUSCHs associated with different panels, facing different TRPs, and using different beams, is associated with corresponding SRS resource sets through control resource set pool index values of a scheduling DCI.

Optionally, the at least one SRS resource set includes a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

Optionally, the numbers of SRS resources included in the plurality of different SRS resource sets are separately configured.

Optionally, the plurality of different SRS resource sets are respectively associated with different power control parameters and path loss estimation reference signal (PL - RS) sets.

Optionally, the at least one SRS resource set being associated with different control resource set pool indexes includes: the plurality of different SRS resource sets are respectively associated with a plurality of different control resource set pool indexes.

Optionally, the DG-PUSCHs are associated with different SRS resource sets through the control resource set pool index values of the scheduling DCI.

Optionally, a CG-PUSCH is a CG-PUSCH of a type I; in which for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource sets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the numbers of SRS resources included in the plurality of different SRS resource subsets are separately configured.

Optionally, the plurality of different SRS resource subsets are respectively associated with different power control parameters and PL-RS sets.

Optionally, the at least one SRS resource set being associated with different control resource set pool indexes includes: the plurality of different SRS resource subsets are associated with a plurality of different control resource set pool indexes.

Optionally, the DG-PUSCHs are associated with different SRS resource subsets through the control resource set pool index values of the scheduling DCI.

Optionally, a CG-PUSCH is a CG-PUSCH of a type I; in which for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resource subsets by activating the control resource set pool index values of the DCI.

Optionally, the at least one SRS resource set includes one SRS resource set, and the one SRS resource set includes a plurality of different SRS resources, in which a function configuration of the one SRS resource set is a "codebook" or a "non-codebook".

Optionally, the at least one SRS resource set being associated with different control resource set pool indexes includes: the plurality of different SRS resources are associated with a plurality of different control resource set pool indexes.

Optionally, the DG-PUSCHs are associated with different SRS resources through the control resource set pool index value of the scheduling DC.

Optionally, a CG-PUSCH is a CG-PUSCH of a type I; in which for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

Optionally, a CG-PUSCH is a CG-PUSCH of a type II; in which for the CG-PUSCH of the type II, different configured grant configuration parameters are associated with corresponding SRS resources by activating the control resource set pool index values of the DCI.

Optionally, the chip further includes a memory 603, and the memory 603 is configured to store necessary computer programs and data.

Those skilled in the art may further understand that various illustrative logical blocks and steps listed in the embodiments of the present disclosure may be implemented by electronic hardware, computer software, or a combination of the two. Whether such functionality is implemented by hardware or software depends upon the particular application and design requirements of the overall system. A person skilled in the art may use various methods to implement the functions for each particular application, but it should not be understood that the implementation goes beyond the protection scope of the embodiments of the present disclosure.

The embodiments of the present disclosure further provide a system for multi-panel enhanced transmission configuration, which includes a communication apparatus serving as a terminal in the foregoing embodiments in FIG. 4 and a communication apparatus serving as a network device, or the system includes a communication apparatus serving as a terminal in the foregoing embodiments in FIG. 5 and a communication apparatus serving as a network device.

The present disclosure further provides a readable storage medium having stored thereon instructions that, when executed by a computer, implement the functions of any one of the above method embodiments.

The present disclosure further provides a computer program product, which, when executed by a computer, implements the functions of any one of the above method embodiments.

**In** the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numerical numbers like first and second in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

The term "predefined" in the present disclosure may be understood as definition, pre-definition, storage, pre-storage, pre-negotiation, pre-configuration, curing, or pre-firing.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for multi-panel enhanced transmission configuration, performed by a network device, comprising:
configuring at least one sounding reference signal (SRS) resource set for transmission of a plurality of physical uplink shared channels (PUSCHs) that are associated with different panels, face different transmitting and receiving points (TRPs), and use different beams; wherein the PUSCHs are PUSCHs simultaneously and respectively sent from different panels, using different beams, and facing different TRPs by a terminal having multiple panels based on scheduling of a plurality of pieces of downlink control information (DCI); and
sending configuration information corresponding to the at least one SRS resource set to the terminal, wherein the configuration information is used to indicate the at least one SRS resource set, and indicate that the at least one SRS resource set is associated with different control resource set pool indexes.

2. The method according to claim 1, wherein the transmission of the PUSCHs comprises at least one of transmission of dynamic grant physical uplink shared channels (DG-PUSCHs) or transmission of configured grant physical uplink shared channels (CG-PUSCHs).

3. The method according to claim 2, wherein the transmission of DG-PUSCHs associated with different panels, facing different TRPs, and using different beams, is associated with corresponding SRS resource sets through control resource set pool index values of a scheduling DCI.

4. The method according to claim 3, wherein the at least one SRS resource set comprises a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

5. The method according to claim 4, wherein the numbers of SRS resources comprised in the plurality of different SRS resource sets are separately configured.

6. The method according to claim 4 or 5, wherein the plurality of different SRS resource sets are respectively associated with different power control parameters and path loss estimation reference signal (PL-RS) sets.

7. The method according to any one of claims 4 to 6, wherein the at least one SRS resource set being associated with different control resource set pool indexes comprises:
the plurality of different SRS resource sets being respectively associated with a plurality of different control resource set pool indexes.

8. The method according to claim 7, wherein the DG-PUSCHs are associated with different SRS resource sets through the control resource set pool index values of the scheduling DCI.

9. The method according to claim 7, wherein a CG-PUSCH is a CG-PUSCH of a type I; wherein for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

10. The method according to claim 7, wherein a CG-PUSCH is a CG-PUSCH of a type II; wherein for the CG-PUSCH of the type II, different configured grant configuration parameters are associated with corresponding SRS resource sets by activating the control resource set pool index values of the DCI.

11. The method according to claim 3, wherein the at least one SRS resource set comprises one SRS resource set, and the one SRS resource set comprises a plurality of different SRS resource subsets, wherein a function configuration of the one SRS resource set is a "codebook" or a "non-codebook".

12. The method according to claim 11, wherein the numbers of SRS resources comprised in the plurality of different SRS resource subsets are separately configured.

13. The method according to claim 11 or 12, wherein the plurality of different SRS resource subsets are respectively associated with different power control parameters and PL-RS sets.

14. The method according to any one of claims 11 to 13, wherein the at least one SRS resource set being associated with different control resource set pool indexes comprises:
the plurality of different SRS resource subsets being associated with a plurality of different control resource set pool indexes.

15. The method according to claim 14, wherein the DG-PUSCHs are associated with different SRS resource subsets through the control resource set pool index values of the scheduling DCI.

16. The method according to claim 14, wherein a CG-PUSCH is a CG-PUSCH of type I; wherein for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

17. The method according to claim 14, wherein a CG-PUSCH is a CG-PUSCH of a type II; wherein for the CG-PUSCH of the type II, different configured grant configuration parameters are associated with corresponding SRS resource subsets by activating the control resource set pool index values of the DCI.

18. The method according to claim 3, wherein the at least one SRS resource set comprises one SRS resource set, and the one SRS resource set comprises a plurality of different SRS resources, wherein a function configuration of the one SRS resource set is a "codebook" or a "non-codebook".

19. The method according to claim 18, wherein the at least one SRS resource set being associated with different control resource set pool indexes comprises:
the plurality of different SRS resources being associated with a plurality of different control resource set pool indexes.

20. The method of claim 19, wherein the DG-PUSCHs are associated with different SRS resources through the control resource set pool index values of the scheduling DCI.

21. The method according to claim 19, wherein a CG-PUSCH is a CG-PUSCH of a type I; wherein for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

22. The method according to claim 19, wherein a CG-PUSCH is a CG-PUSCH of a type II; wherein for the CG-PUSCH of the type II, different configured grant configuration parameters are associated with corresponding SRS resources by activating the control resource set pool index values of the DCI.

23. A method for multi-panel enhanced transmission configuration, performed by a terminal having multiple panels, comprising:
receiving configuration information sent by a network device, wherein the configuration information is used to indicate at least one SRS resource set, and indicate that the at least one SRS resource set is associated with different control resource set pool indexes;
wherein the at least one SRS resource set is a resource set configured by the network device for transmission of a plurality of physical uplink shared channels (PUSCHs) that are associated with different panels, face different transmitting and receiving points (TRPs), and use different beams, and the PUSCHs are PUSCHs simultaneously and respectively sent from different panels, using different beams, and facing different TRPs by the terminal based on scheduling of a plurality of pieces of downlink control information (DCI).

24. The method according to claim 23, wherein the transmission of the PUSCHs comprises at least one of transmission of dynamic grant physical uplink shared channels (DG-PUSCHs) or transmission of configured grant physical uplink shared channels (CG-PUSCHs).

25. The method according to claim 24, wherein the transmission of DG-PUSCHs associated with different panels, facing different TRPs, and using different beams, is associated with corresponding SRS resource sets through control resource set pool index values of a scheduling DCI.

26. The method according to claim 25, wherein the at least one SRS resource set comprises a plurality of different SRS resource sets, and the plurality of different SRS resource sets are respectively associated with transmission of different PUSCHs from different panels, facing different TRPs, and using different beams; and a function configuration of the plurality of different SRS resource sets is a "codebook" or a "non-codebook".

27. The method according to claim 26, wherein the numbers of SRS resources comprised in the plurality of different SRS resource sets are separately configured.

28. The method according to claim 26 or 27, wherein the plurality of different SRS resource sets are respectively associated with different power control parameters and path loss estimation reference signal (PL-RS) sets.

29. The method according to any one of claims 26 to 28, wherein the at least one SRS resource set being associated with different control resource set pool indexes comprises:
the plurality of different SRS resource sets being respectively associated with a plurality of different control resource set pool indexes.

30. The method according to claim 29, wherein the DG-PUSCHs are associated with different SRS resource sets through the control resource set pool index values of the scheduling DCI.

31. The method according to claim 29, wherein a CG-PUSCH is a CG-PUSCH of a type I; wherein for the CG-PUSCH of the type I, a corresponding SRS resource set identifier and a sounding reference signal resource indication (SRI) are configured for a configured grant configuration parameter through a radio resource control (RRC) signaling, or a corresponding control resource set pool index and an SRI are configured for a configured grant configuration parameter through an RRC signaling.

32. The method according to claim 29, wherein a CG-PUSCH is a CG-PUSCH of a type II; wherein for the CG-PUSCH of the type II, different configured grant configuration parameters are associated with corresponding SRS resource sets by activating the control resource set pool index values of the DCI.

33. The method according to claim 25, wherein the at least one SRS resource set comprises one SRS resource set, and the one SRS resource set comprises a plurality of different SRS resource subsets, wherein a function configuration of the one SRS resource set is a "codebook" or a "non-codebook".

34. The method according to claim 33, wherein the numbers of SRS resources comprised in the plurality of different SRS resource subsets are separately configured.

35. The method according to claim 33 or 34, wherein the plurality of different SRS resource subsets are respectively associated with different power control parameters and PL-RS sets.

36. The method according to any one of claims 33 to 35, wherein the at least one SRS resource set being associated with different control resource set pool indexes comprises:
the plurality of different SRS resource subsets being associated with a plurality of different control resource set pool indexes.

37. The method of claim 36, wherein the DG-PUSCHs are associated with different SRS resource subsets through the control resource set pool index values of the scheduling DCI.

38. The method according to claim 36, wherein a CG-PUSCH is a CG-PUSCH of type I; wherein for the CG-PUSCH of the type I, a corresponding SRS resource subset identifier and an SRI are configured for a configured grant configuration parameter through an RRC signaling, or a corresponding control resource set pool index and an SRI are configured for a configured grant configuration parameter through an RRC signaling.

39. The method according to claim 36, wherein a CG-PUSCH is a CG-PUSCH of a type II; wherein for the CG-PUSCH of the type II, different configured grant configuration parameters are associated with corresponding SRS resource subsets by activating the control resource set pool index values of the DCI.

40. The method according to claim 25, wherein the at least one SRS resource set comprises one SRS resource set, and the one SRS resource set comprises a plurality of different SRS resources, wherein a function configuration of the one SRS resource set is a "codebook" or a "non-codebook".

41. The method according to claim 40, wherein the at least one SRS resource set being associated with different control resource set pool indexes comprises:
the plurality of different SRS resources being associated with a plurality of different control resource set pool indexes.

42. The method of claim 41, wherein the DG-PUSCHs are associated with different SRS resources through the control resource set pool index values of the scheduling DC.

43. The method according to claim 41, wherein a CG-PUSCH is a CG-PUSCH of a type I; wherein for the CG-PUSCH of the type I, a corresponding SRS resource identifier and an SRI are configured for a configured grant configuration parameter through an RRC signaling, or a corresponding control resource set pool index and an SRI are configured for a configured grant configuration parameter through an RRC signaling.

44. The method according to claim 41, wherein a CG-PUSCH is a CG-PUSCH of a type II; wherein for the CG-PUSCH of the type II, different configured grant configuration parameters are associated with corresponding SRS resources by activating the control resource set pool index values of the DCI.

45. A communication apparatus, comprising:
a processing module, configured to configure at least one sounding reference signal (SRS) resource set for transmission of a plurality of physical uplink shared channels (PUSCHs) that are associated with different panels, face different transmitting and receiving points (TRPs), and use different beams; wherein the PUSCHs are PUSCHs simultaneously and respectively sent from different panels, using different beams, and facing different TRPs by a terminal having multiple panels based on scheduling of a plurality of pieces of downlink control information (DCI);
a transceiver module, configured to send configuration information corresponding to the at least one SRS resource set to the terminal, wherein the configuration information is used to indicate the at least one SRS resource set, and indicate that the at least one SRS resource set is associated with different control resource set pool indexes.

46. A communication apparatus, comprising:
a transceiver module, configured to receive configuration information sent by a network device, wherein the configuration information is used to indicate at least one SRS resource set, and indicate that the at least one SRS resource set is associated with different control resource set pool indexes;
wherein the at least one SRS resource set is a resource set configured by the network device for transmission of a plurality of physical uplink shared channels (PUSCHs) that are associated with different panels, face different transmitting and receiving points (TRPs), and use different beams, and the PUSCHs are PUSCHs simultaneously and respectively sent from different panels, using different beams, and facing different TRPs by the terminal based on scheduling of a plurality of pieces of downlink control information (DCI).

47. A communication apparatus, comprising a processor and a memory, wherein the memory stores a computer program, and the processor executes the computer program stored in the memory, so that the apparatus executes the method according to any one of claims 1 to 22.

48. A communication apparatus, comprising a processor and a memory, wherein the memory stores a computer program, and the processor executes the computer program stored in the memory, so that the apparatus executes the method according to any one of claims 23 to 44.

49. A computer-readable storage medium for storing instructions, wherein when the instructions are executed, the method according to any one of claims 1 to 22 is implemented.

50. A computer-readable storage medium for storing instructions, wherein when the instructions are executed, the method according to any one of claims 23 to 44 is implemented.
